# NEUE EUROPÄISCHE PATENTSCHRIFT

(11) **EP 3 840 951 B2**
(45) Veröffentlichungstag und Bekanntmachung des Hinweises auf die Entscheidung über den Einspruch: **07.10.2026**
(45) Hinweis auf die Patenterteilung: 08.03.2023
(21) Anmeldenummer: 18759609.3
(22) Anmeldetag: 23.08.2018
(51) Int. Cl.: B32B 37/14, B29C 48/08, B32B 7/12, B32B 27/08

(54) **RECYCLINGFREUNDLICHES, EINFACH REISSBARES VERPACKUNGSLAMINAT MIT GUTER BARRIEREWIRKUNG UND VERFAHREN ZU DESSEN HERSTELLUNG**
RECYCLABLE, EASILY TEARABLE PACKAGING LAMINATE HAVING A GOOD BARRIER EFFECT, AND METHOD FOR PRODUCTION THEREOF
STRATIFIÉ D'EMBALLAGE RECYCLABLE, FACILEMENT DÉCHIRABLE, À EFFET BARRIÈRE SATISFAISANT, ET SON PROCÉDÉ DE FABRICATION

(43) Veröffentlichungstag der Anmeldung: 30.06.2021
(73) Patentinhaber: Constantia Pirk GmbH & Co. KG, 92712 Pirk (DE)
(72) Erfinder: GREFENSTEIN, Achim, 67122 Altrip (DE); KICK, Markus, 92637 Weiden (DE); LAMTIGUI, Thami, 80992 München (DE)
(74) Vertreter: Weiss Patentanwalts GmbH
(86) Internationale Anmeldenummer: PCT/EP2018/072774
(87) Internationale Veröffentlichungsnummer: WO 2020/038579

(56) Entgegenhaltungen:
- EP-A1- 0 673 756
- EP-A1- 0 673 756
- EP-A2- 0 911 150
- EP-A2- 0 911 150
- WO-A1-2013/041469
- WO-A1-2018/101464
- WO-A1-2018/202479
- JP-A- H06 262 737
- JP-A- H06 262 737
- US-A1- 2017 136 747
- US-A1- 2017 136 747

## Beschreibung

Die gegenständliche Erfindung betrifft ein Verpackungslaminat mit einer ersten Laminatschicht und einer zweiten Laminatschicht, wobei die erste Laminatschicht eine Barriereschicht umfasst, sowie ein Verfahren zur Herstellung eines solchen Verpackungslaminats.

In der Verpackungsindustrie werden Verpackungslaminate verwendet, die je nach Anwendung verschiedene Eigenschaften aufweisen sollen. Solche Verpackungslaminate sind in der Regel mehrschichtige Kunststofffolien, die im Extrusionsverfahren, Co-Extrusionsverfahren (in beiden Fällen sowohl im Flachfolien-, als auch im Blasfolienverfahren) oder Kaschierverfahren (Verbindung einzelner Schichten mittels eines Kaschierklebers), auch Mischungen davon, hergestellt werden. Im Verpackungslaminat können auch nicht aus Kunststoff bestehende Schichten integriert sein, beispielsweise eine Schicht aus Aluminium oder Papier. Das Verpackungslaminat weist in der Regel auch eine äußere Siegelschicht auf, um das Verpackungslaminat durch Thermosiegeln zu einer gewünschten Verpackung, wie z.B. einem Beutel, einem Sack, eine Tüte, usw., zu verarbeiten. In einer anderen Anwendung kann ein Verpackungslaminat auch als Schrumpffolie ausgeführt sein, die je nach Anwendung auch in siegelfähiger, aber unbedruckter Ausführung, z.B. für die Verpackung von größeren Fleischportionen, hergestellt sein kann.

Eine typische Anforderung an ein Verpackungslaminat ist eine Barrierefunktion gegen Wasserdampf, Sauerstoff und Aroma. Zu diesem Zweck enthält das Verpackungslaminat in der Regel eine Barriereschicht aus Aluminium oder einem geeigneten Barrierepolymer, wie beispielweise Ethylen-Vinylalkohol-Copolymer (EVOH) oder Polyamid (PA). Daneben können noch weitere Schichten enthalten sein, um dem Verpackungslaminat die gewünschten Eigenschaften, wie Zähigkeit, Steifigkeit, Schrumpffähigkeit, Reißfestigkeit, etc., zu verleihen. Eine Siegelschicht ist typischerweise aus einem Polyolefin, in der Regel Polypropylen (PP) oder Polyethylen (PE) in den verschiedenen Dichten LLDPE, LDPE, MDPE oder HDPE, ausgeführt.

Um das Verpackungslaminat einfach verarbeiten zu können, darf sich das Verpackungslaminat natürlich auch nicht Werfen oder Einrollen (das sogenannte Curling), weshalb üblicherweise symmetrische Schichtaufbauten zum Einsatz kommen.

Ferner ist es bekannt, die Eigenschaften des Verpackungslaminats durch eine mono- oder biaxiale Orientierung zu verändern. Eine solche Orientierung kann durch den Extrusionsprozess erfolgen, beispielsweise bei einem Mehrfachblasen-Extrusionsverfahren (multiple bubble process), oder erst nach dem Extrusionsprozess durch eine Dehnung des Verpackungslaminats in Maschinenrichtung (in Längsrichtung des Verpackungslaminats) und/oder in Querrichtung (normal auf die Längsrichtung). Durch die Orientierung des Verpackungslaminats kann vor allem die Steifigkeit, Zugfestigkeit und Zähigkeit verbessert werden. Weiters kann durch die Orientierung die Kristallisation des Verpackungslaminats verändert werden, dass auch an sich eher trübe Materialien, wie z.B. HDPE, nach dem Verstrecken eine höhere Transparenz erreichen.

Die WO 2013/032932 A1 beschreibt ein derartiges Verpackungslaminat, beispielsweise mit dem Aufbau HDPE/Verbindungsschicht/EVOH/Verbindungsschicht/Siegelschicht, als Schrumpffolie. Zur Herstellung der Schrumpfeigenschaft wird das Verpackungslaminat als Ganzes biaxial gereckt. Damit kann das Recken aber nur durchgeführt werden, nachdem die einzelnen Schichten des Verpackungslaminats eine ausreichende Verbundhaftung erreicht haben. Ähnliches zeigt die WO 2009/017588 A1. Die WO 2013/032932 A1 und die WO 2009/017588 A1 zielen aber vorrangig auf ein geeignetes Material für die Verbindungsschicht ab.

Auch aus der EP 673 759 B1 geht ein Verpackungslaminat für eine Schrumpffolie hervor, mit einer Barriereschicht aus EVOH und zumindest einer weiteren Polymerschicht, die hinsichtlich der Reckeigenschaften kompatibel mit der Barriereschicht sein soll. Als Beispiel für die weitere Polymerschicht wird ein Anhydrid modifiziertes Lineares Polyethylen niedriger Dichte (LLDPE) genannt.

Die WO 2015/175871 A1 beschreibt wiederum ein Verpackungslaminat aus einer HDPE-Schicht, die mit einer Barriereschicht, beispielsweise aus PA, Vinyl-haltigen oder Acrylathaltigen Polymeren, verbunden ist. An der Barriereschicht kann weiters auch eine Siegelschicht, beispielsweise aus LLDPE, angeordnet sein. Das Ziel ist ein recyclefreundliches Laminat herzustellen, indem die Barriereschicht maximal 5% des Gesamtgewichts des Verpackungslaminats ausmacht. Das Verpackungslaminat der WO 2015/175871 A1 ist nicht orientiert.

In vielen Verpackungen aus einem Verpackungslaminat ist es auch erwünscht, die Verpackung einfach von Hand reißen zu können, insbesondere zum einfachen Öffnen der Verpackung. Hier ist es z.B. aus der WO 2005/113370 A1 bekannt, dass eine unidirektional gereckte Folie parallel zur Reckrichtung einfacher gerissen werden kann, als quer dazu, und dass eine solche Folie parallel zur Reckrichtung gegenüber einer ungereckten oder bidirektional gereckten Folie auch mit verringerter Reißkraft gerissen werden kann. Eine solche Folie kann auch Teil eines Laminats sein, das auch eine Barriereschicht aus Aluminium oder EVOH umfassen kann. Die unidirektional gereckte Folie gibt dem Laminat die guten Reißeigenschaften parallel zur Reckrichtung und verhindert im Wesentlichen ein Reißen quer dazu.

Die EP 1 769 908 A1 beschreibt wiederum, dass ein Laminat aus einer Barriereschicht (z.B. aus EVOH) und einer beidseitigen Kunststoffschicht in beide Richtungen einfach gerissen werden kann, wenn die Kunststoffschicht aus einer Mischung von PE mit einer Dichte zwischen 0,910 g/cm³ und 0,960 g/cm³ (also LDPE, MDPE oder HDPE) und einem Polycyclischen Olefin, wie z.B. ein Cycloolefin-Copolymer (COC), besteht und das Laminat einer geringen bidirektionalen Streckung unterworfen wird. Eine solche geringe bidirektionale Streckung stellt sich beispielsweise bei der Extrusion im Blasfolienverfahren ein, womit ein separater Schritt der Orientierung des Laminats nach der Extrusion unterbleiben kann. Ein solches Laminat ist aber aufgrund des Anteils an COC nur bedingt recyclefähig und auch aufwendiger herzustellen, als ein reinsortiges Material. Bei hohem COC Anteil, es werden bis zu 60% COC in der Mischung erwähnt, ist das Laminat überhaupt nicht mehr recyclefähig, zumindest sofern in den PE-Anteilen auch größere Mengen von LDPE enthalten sind.

Die JPH6-262737 A1 beschreibt ein Verpackungslaminat mit einer HDPE-Schicht und einer Barriereschicht, z.B. aus EVOH, mit einem linearen Reißverhalten. Darin wird ausgeführt, dass ein unidirektional oder bidirektional gerecktes Verpackungslaminat zum schrägen Einreißen des Laminats und damit zu einem unkontrollierten Öffnungsverhalten einer damit hergestellten Verpackung führt. Um dieses Problem zu beheben wird anstelle des Reckens ein unidirektionales Rollen des Laminats vorgeschlagen, was zu einem linearen Reißverhalten führen soll. Dabei soll die Orientierung in Längsrichtung und Querrichtung nicht weniger als 5 sein und das Verhältnis der Orientierung in Längsrichtung und Querrichtung soll in einem Bereich zwischen 5 und 15 liegen. Solche Verhältnisse werden beim Recken eines Laminats nicht erreicht. Typischerweise liegt das Verhältnis der Orientierungen beim bidirektionalen Recken unterhalb von Eins.

Weitere Beispiele von Verpackungslaminaten sind in der US 2017/136747 A sowie der in der EP 911 150 A2 beschrieben, die allerdings nicht auf die Verbesserung der Reißeigenschaften des Verpackungslaminats abzielen.

Es ist eine Aufgabe der gegenständlichen Erfindung ein recyclefreundliches Verpackungslaminat anzugeben, das einfach hergestellt werden kann und das in beide Richtungen einfach reißbar ist. Es ist weiters eine Aufgabe, ein Herstellverfahren für ein solches Verpackungslaminat anzugeben.

Diese Aufgabe wird gelöst durch Co-Extrusion einer ersten Laminatschicht bestehend aus einer Substratschicht mit einem HDPE-Anteil von zumindest 60 Vol%, einer Verbindungsschicht und einer Barriereschicht aus einem Barrierepolymer aus Polyamid oder Ethylen-Vinylalkohol-Copolymer mit einer Dicke von maximal 20% der Gesamtdicke der ersten Laminatschicht, wobei die Verbindungsschicht zwischen der Substratschicht und der Barriereschicht angeordnet wird, dem nachfolgenden bidirektionalen Recken der co-extrudierten ersten Laminatschicht, und dem nachfolgenden Verbinden der derart bidirektional gereckten ersten Laminatschicht mit einer zweiten Laminatschicht mit einem Polyethylen-Anteil von zumindest 80 Vol%, wobei die zweite Laminatschicht mit der Barriereschicht der ersten Laminatschicht verbunden wird. Das erfindungsgemäße Verpackungslaminat umfasst eine erste Laminatschicht und eine zweite Laminatschicht, wobei die erste Laminatschicht ein co-extrudierter und bidirektional gereckter Verbund aus einer Substratschicht mit einem HDPE-Anteil von zumindest 60Vol%, einer Verbindungsschicht und einer Barriereschicht aus einem Barrierepolymer aus Polyamid oder Ethylen-Vinylalkohol-Copolymer mit einer Dicke von maximal 20% der Gesamtdicke der ersten Laminatschicht, ist, wobei die Verbindungsschicht zwischen der Substratschicht und der Barriereschicht angeordnet ist und die erste Laminatschicht an deren Barriereschicht mit der zweiten Laminatschicht verbunden ist.

Durch das bidirektionale Recken der ersten Laminatschicht vor dem Laminieren mit der zweiten Laminatschicht wird die Barrierewirkung der ersten Laminatschicht deutlich erhöht. Zusätzlich wurde überraschender Weise festgestellt, dass durch das bidirektionale Recken die erste Laminatschicht mit dem definierten Aufbau in beide Richtungen gleichermaßen einfach gerissen werden kann. Diese Reißeigenschaften werden dem Verpackungslaminat aufgeprägt, sodass auch das Verpackungslaminat selbst einfach in beide Richtungen gerissen werden kann. Zusätzlich vereinfacht sich die Herstellung durch den einfachen, asymmetrischen Aufbau der ersten Laminatschicht gegenüber üblichen symmetrischen Aufbauten erheblich, was auch die Herstellkosten deutlich senkt.

Eine gereckte Schicht mit einem hohen HDPE-Anteil, insbesondere wenn der HDPE-Anteil größer 80% und darüber liegt, neigt zum Spleißen in Längsrichtung. Deshalb wurden in PE-Verpackungslaminaten solche MDO Schichten mit einem hohen HDPE-Anteil bisher immer mit dem zäheren LLDPE oder mLLDPE kombiniert, beispielsweise durch eine weitere Schicht aus LLDPE, wobei ein hoher LLDPE-Anteil im Verpackungslaminat angestrebt wurde. Es wurde nun ferner überraschenderweise festgestellt, dass die erste Laminatschicht mit einem derart hohen HDPE-Anteil (auch gegen 100% HDPE) auch ohne einer solchen zähen LLDPE-Schicht ausreichend zäh ist und nicht zum Spleißen neigt. Der Grund dafür liegt in der Verbindungsschicht, die der Laminatschicht die benötigte Zähigkeit verleiht. Die erste Laminatschicht kann daher vorteilhaft auch als Barrierefolie verwendet werden.

Aufgrund der guten Transparenz der gereckten HDPE-Substratschicht können die optischen Eigenschaften des Verpackungslaminats verbessert werden, wenn die erste Laminatschicht vor dem Verbinden mit der zweiten Laminatschicht an der Barriereschicht bedruckt, metallisiert oder beschichtet wird. Durch das Metallisieren oder Beschichten kann zusätzlich noch die Barrierewirkung erhöht werden.

Für gewisse Anwendungen ist es vorteilhaft, wenn die erste Laminatschicht an der Substratschicht mit einer weiteren ein- oder mehrschichtigen Laminatschicht verbunden wird. Dabei kann die erste Laminatschicht an der Barriereschicht und/oder an der Substratschicht bedruckt, metallisiert oder beschichtet sein. Ebenso kann zumindest eine Schicht der weiteren Laminatschicht bedruckt, metallisiert oder beschichtet sein.

Für gewisse Anwendungen ist es vorteilhaft, wenn die erste Laminatschicht an deren Substratschicht mit einer unidirektional oder bidirektional gereckten vierten Laminatschicht verbunden wird, die eine Substratschicht mit einem HDPE-Anteil von zumindest 60 Vol%, eine Barriereschicht aus einem Barrierepolymer und eine dazwischen angeordnete Verbindungsschicht aufweist. Ein derartiges Verpackungslaminat weist besonders gute Barriereeigenschaften auf.

Eine weitere vorteilhafte Ausgestaltung ergibt sich, wenn die zweite Laminatschicht ein co-extrudiertes, in Maschinenrichtung oder bidirektional gerecktes Laminat aus einer Substratschicht mit einem HDPE-Anteil von zumindest 60 Vol%, vorzugsweise zumindest 70 Vol% und ganz besonders vorzugsweise zumindest 80 Vol%, einer Verbindungsschicht, einer Barriereschicht aus einem Barrierepolymer, vorzugsweise aus Polyamid oder Ethylen-Vinylalkohol-Copolymer, mit einer Dicke von maximal 20% der Gesamtdicke der zweiten Laminatschicht und einer Siegelschicht ist, wobei die Verbindungsschicht der zweiten Laminatschicht zwischen der Substratschicht und der Barriereschicht der zweiten Laminatschicht angeordnet ist und die Siegelschicht an der Substratschicht angeordnet ist und die Barriereschicht der zweiten Laminatschicht mit der Barriereschicht der ersten Laminatschicht verbunden ist. Auch ein solches Verpackungslaminat weist besonders gute Barriereeigenschaften auf. Zusätzlich wird dadurch die Siegelschicht vorteilhaft in die co-extrudierte zweite Laminatschicht integriert, womit keine weiteren Herstellungsschritte für das Verpackungslaminat benötigt werden.

Die gegenständliche Erfindung wird nachfolgend unter Bezugnahme auf die Figuren 1 bis 5 näher erläutert, die beispielhaft, schematisch und nicht einschränkend vorteilhafte Ausgestaltungen der Erfindung zeigen. Dabei zeigt
Fig.1 eine erste Ausgestaltung eines erfindungsgemäßen Verpackungslaminats,
Fig.2 eine zweite vorteilhafte Ausgestaltung eines erfindungsgemäßen Verpackungslaminats,
Fig.3 eine dritte vorteilhafte Ausgestaltung eines erfindungsgemäßen Verpackungslaminats,
Fig.4 eine vierte vorteilhafte Ausgestaltung eines erfindungsgemäßen Verpackungslaminats und
Fig.5 eine Ausgestaltung einer erste Laminatschicht als symmetrische Barrierefolie.

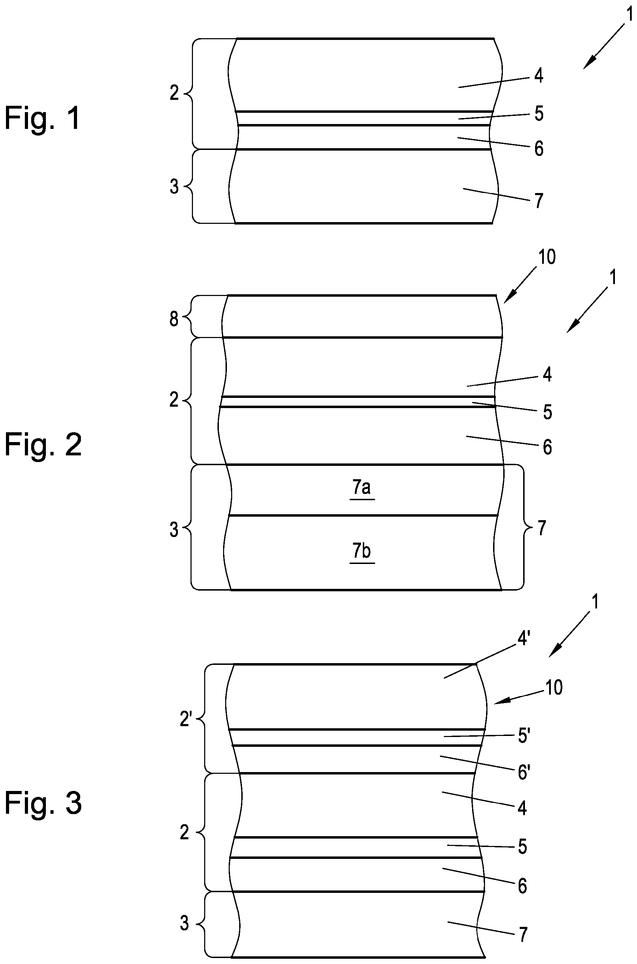

Die Fig.1 zeigt ein erfindungsgemäßes Verpackungslaminat 1 mit einer ersten Laminatschicht 2 und einer damit verbundenen zweiten Laminatschicht 3.

Die erste Laminatschicht 2 im Verpackungslaminat 1 ist in Maschinenrichtung (MDO) und in Querrichtung (TDO), also bidirektional, gereckt und hat einen asymmetrischen Schichtaufbau mit einer Substratschicht 4 und einer Barriereschicht 6, die durch eine Verbindungsschicht 5 miteinander verbunden sind. Die Dicke der ersten Laminatschicht 2 beträgt 10 bis 40µm.

Die Substratschicht 4 hat einen Anteil an Polyethylen (PE) hoher Dichte (HDPE) von mindestens 60 Vol%, vorzugsweise zumindest 70 Vol% und ganz besonders vorzugsweise zumindest 80 Vol%. Der HDPE-Anteil kann dabei gegen 100 Vol% gehen, wobei aufgrund üblicher Additive (wie Slipadditive, Antiblockadditive, Füllstoffe, usw.) 100 Vol% in der Regel nie erreicht wird. Unter einem HDPE wird ein PE mit einer Dichte zwischen 0,94-0,97 g/cm³ verstanden. Der Rest ist ein kompatibles Polyolefin-Material, vorzugsweise ein lineares Polyethylen niedriger Dichte (LLDPE) (mit einer Dichte zwischen 0,87-0,94g/cm³), ein Polyethylen niedriger Dichte (LDPE) (mit einer Dichte zwischen 0,915-0,935 g/cm³) oder auch ein lineares Metallocene Polyethylen niedriger Dichte (mLLDPE), insbesondere um die Zähigkeit zu erhöhen. Als kompatibles Polyolefin-Material kommen grundsätzlich jegliche Arten von Polyethylenen in Frage, insbesondere auch Ethylen-Copolymere, wie beispielsweise Ethylen-Vinylacetat-Copolymer (EVA), Methacrylsäureethylester (EMA), Ethylen/AcrylsäureCopolymer (EAA) oder Ethylen-Butylacrylat-Copolymer (EBA). Ebenso kann als kompatibles Polyolefin-Material auch Polypropylen (PP) oder ein Cycloolefin-Copolymer (COC) im Ausmaß von maximal 20 Vol% verwendet werden. Im Falle vom PP wird vorzugsweise ein Polypropylen-Random-Copolymer mit Ethylen als Comonomer (üblich 5 bis 15%), ein Polypropylen-Copolymer mit Ethylen oder ein Polypropylen-Homopolymer, das mit linearen PE-Typen, wie mLLDPE, LLDPE oder HDPE ausreichend kompatibel ist, verwendet, um eine zumindest begrenzte Recyclefähigkeit zu erzielen.

Das HDPE und das kompatible Polyolefin-Material können dabei in der Substratschicht 4 als Mischung vorliegen. Die Substratschicht 4 kann aber auch mehrschichtig (extrudiert oder co-extrudiert) aufgebaut sein mit einer (oder auch mehrerer) HDPE Schicht und einer (oder auch mehrerer) Schicht aus dem Polyolefin-Material. Die Dicke der Substratschicht 4 beträgt vorzugsweise 5 bis 35µm.

Die Barriereschicht 6 besteht aus einem Barrierepolymer, also einem Polymer mit einer ausreichenden Barriereeigenschaft, insbesondere gegen Sauerstoff, Wasserstoff und/oder Aroma. Das Barrierepolymer ist ein Polyamid (PA) oder ein Ethylen-Vinylalkohol-Copolymer (EVOH). Bevorzugt wird EVOH als Barrierepolymer. Die Barriereschicht 6 hat eine Dicke von maximal 20%, vorzugsweise 5 bis 10%, der Gesamtdicke der ersten Laminatschicht 2, also maximal 2 bis 8µm. Durch die geringe Dicke der Barriereschicht 6 wird dadurch die Recyclingfreundlichkeit nicht beeinträchtigt.

Die Verbindungsschicht 5 dient zum Verbinden der Barriereschicht 6 und der Substratschicht 4. Hierbei soll eine ausreichende Verbundhaftung erreicht werden, insbesondere um eine unerwünschte Delamination der ersten Laminatschicht 2 sicher zu verhindern. Geeignete Verbindungsschichten 5 bestehen vorzugsweise aus Polymeren mit erhöhter Polarität, beispielsweise auf Basis von mit Maleinsäureanhydrid modifizierten Polyolefinen (wie PE oder PP), Ethylen-Vinylacetat-Copolymer (EVA), Ethylen/Acrylsäure-Copolymer (EAA), Ethylen-Butylacrylat-Copolymer (EBA), oder ähnliche Polyolefincopolymere. Die Dicke einer Verbindungsschicht 5 beträgt maximal 10% der Gesamtdicke der ersten Laminatschicht 2, typischerweise 1 bis 5µm.

Die zweite Laminatschicht 3 besteht vorwiegend aus einem PE, wobei der PE-Anteil an der gesamten Polymermenge der zweiten Laminatschicht 3 ohne etwaige zugesetzte mineralische oder anderen Füllstoffe zumindest 80 Vol% betragen soll. Hier können verschiedene PE-Typen, also LDPE, LLDPE, MDPE, HDPE reinsortig oder auch als Mischung oder in Form von Co-Polymeren oder auch mehrschichtig, verwendet werden. Die Dicke der zweiten Laminatschicht 3 beträgt zwischen 20 bis 200 µm.

Auch in der zweiten Laminatschicht 3 wird für die angestrebte Recyclefreundlichkeit der verbleibende Rest natürlich aus einem kompatiblen Polyolefin-Material, so wie oben beschrieben, bestehen.

Durch die Verwendung von vorwiegend PE und kompatiblen Materialien im Verpackungslaminat 1 kann ein besonders reycylingfreundliches Laminat hergestellt werden, das mit gängigen Methoden im mechanischen Recycling einfach und kostengünstig wiederverwertet werden kann.

Die erste Laminatschicht 2 wird durch Co-Extrusion hergestellt, weil das eine besonders einfache, kostengünstige Herstellung ermöglicht. Vorzugsweise kommt das bekannte Blasfolien- oder Flachfolienextrusionsverfahren zum Einsatz.

Die erste Laminatschicht 2 wird nach der Co-Extrusion bidirektional, also in Maschinenrichtung (in der Regel die Längs- oder Extrusionsrichtung) und in Querrichtung (90° verdreht zur Maschinenrichtung), gereckt. Der Reckgrad in Maschinenrichtung und in Querrichtung muss dabei nicht gleich sein. Der Reckgrad in Maschinenrichtung beträgt dabei vorzugsweise zumindest 4:1 bis 8:1. Der Reckgrad in Querrichtung beträgt dabei vorzugsweise zumindest 5:1 bis 10:1. Das Recken kann dabei in-line (also unmittelbar nach der Co-Extrusion) oder off-line (also zu einem späteren Zeitpunkt nach der Co-Extrusion) erfolgen. Dabei kann zuerst in Maschinenrichtung gereckt werden und anschließend in Querrichtung, oder ebenso ist es denkbar in beide Richtungen gleichzeitig zu recken. Das Recken findet typischerweise ca. 10°C bis 30°C, typisch ca. 20°C, unterhalb der niedrigsten Schmelztemperatur (bei HDPE ca. 128°C bis 130°C) in der ersten Laminatschicht 2 statt.

Hier ist anzumerken, dass bei der Blasfolienextrusion und Flachfolienextrusion der Extrusionsspalt (bei der Blasfolie 1,5 bis 2,5 mm) bzw. der Spalt der Extrusionsdüse deutlich größer ist, als die Enddicke der extrudierten Folie (typisch zwischen 10 bis 200 µm). Hierzu wird die extrudierte Schmelze bei Temperaturen deutlich über dem Schmelzpunkt des extrudierten Polymers gedehnt, wodurch es die endgültige Dicke erhält. Bei der Blasfolienextrusion wird die Schmelze z.B. typischerweise in Querrichtung um ca. den Faktor 2 bis 3 (das sogenannte Aufblasverhältnis) und in Längsrichtung um den Faktor 1:10 bis 1:100 (das sogenannte Abzugsverhältnis) gedehnt. Dieses Dehnen beim Extrudieren kann aber nicht mit dem Recken einer Kunststofffolie verglichen werden, da das Recken üblicherweise bei Temperaturen knapp unterhalb des Schmelzpunktes des Polymers erfolgt, um die ungeordneten Polymere und die teilkristallinen Bereiche durch das Recken in Reckrichtung bleibend auszurichten.

Ein unsymmetrischer Aufbau der ersten Laminatschicht 2 aus vorrangig Polyethylen mit bidirektionaler Reckung ist untypisch und wurde bisher, insbesondere bei der Blasfolie, in der Praxis vermieden, da man davon ausging, dass sich ein solcher Aufbau, insbesondere durch Wasseraufnahme der polaren Barriereschicht 6, einrollt (Curling), was die Weiterverarbeitung erschweren oder unmöglich machen würde. Es hat sich aber gezeigt, dass das Einrollen in der konkreten Ausgestaltung des Aufbaus in einem akzeptablen Maß passiert, das für die Weiterverarbeitung nicht hinderlich ist. Dazu ist es vorteilhaft, wenn die erste Laminatschicht 2 sehr zeitnah nach der Fertigung mit der zweiten Laminatschicht 3 verbunden wird, um dadurch vor allem die Wasseraufnahme der Barriereschicht 6 zu verringern. Unter Umständen kann es auch erforderlich oder sinnvoll sein, die co-extrudierte Folienrolle mit der ersten Laminatschicht 2 bis zum Kaschieren durch eine geeignete Verpackung vor der Wasseraufnahme zu schützen.

Der Vorteil des untypischen asymmetrischen Aufbaus der ersten Laminatschicht 2 liegt aber vor allem darin, dass nur eine einzige teure und wenig steife Verbindungsschicht 5 benötigt wird. Damit können die Kosten für die erste Laminatschicht 2 reduziert werden und es kann eine steifere erste Laminatschicht 2 erzielt werden. Die höhere Steifigkeit ist vor allem bei der Verwendung des Verpackungslaminats 1 zur Herstellung eines Beutels vorteilhaft.

Weitere Vorteile der erfindungsgemäßen ersten Laminatschicht 2 ergeben sich aus der Verstreckung. Dadurch ergibt sich eine hohe Transparenz, vor allem der Substratschicht 4. Durch die Verstreckung der Barriereschicht werden im Vergleich zum ungereckten gleichartigen Barrierepolymer ca. drei- bis vierfach erhöhte Barrierewerte erzielt, wodurch weniger teures Barrierepolymer bei gleicher Barrierewirkung zum Einsatz kommen kann. Dadurch können die Kosten der ersten Laminatschicht 2 deutlich gesenkt werden. Abgesehen davon wird für eine gleiche Barrierewirkung weniger Barrierepolymer benötigt, was die Recycelfähigkeit zusätzlich verbessert.

Bevorzugt wird die erste Laminatschicht 2 mit dem mehrstufigen Blasfolienextrusionverfahren (z.B. Triple- oder Double-Bubble-Verfahren) hergestellt, weil sich damit produktionsbedingt weniger Randabschnitt ergibt, was vor allem bei den teureren Barrierepolymeren zu niedrigeren Kosten des Verpackungslaminats 1 führt. Bei der Blasfolienextrusion können auch zähfließendere HDPE-Materialien mit einem MFI (Mass Flow Index) von kleiner 3 verwendet werden. Solche HDPE Materialen haben einen höheres Molekulargewicht und bessere mechanische Eigenschaften, was für die Verwendung in einem Verpackungslaminat 1 günstig ist. Allerdings würde ein solches Material besonders leicht in Längsrichtung reißen und es kommt sogar zum unerwünschten Spleißen in Längsrichtung. Diese unerwünschte Eigenschaft kann durch das Einbinden des HDPE-Materials mit einem MFI von kleiner 3 in eine erste Laminatschicht 2 wie beschrieben eliminiert werden und sogar ein gleichmäßiges Reißen in beide Richtungen erzielt werden.

Eine bidirektional gereckte, erste Laminatschicht 2, mit einer Substratschicht 4, einer Barriereschicht 6 und einer Verbindungsschicht 5 wie ausgeführt, neigt auch trotz des hohen HDPE-Anteils von 60 Vol%, insbesondere auch bei sehr hohen HDPE-Anteilen von größer 80 Vol% bis 100 Vol%, nicht zum Spleißen in Längsrichtung nach dem ersten Reckschritt in Maschinenrichtung, wie überraschenderweise festgestellt wurde. Diese Wirkung tritt dabei sowohl bei einem unsymmetrischen Aufbau der ersten Laminatschicht 2, als auch bei einem symmetrischen Aufbau der ersten Laminatschicht 2 ein.

Es wurde überraschender Weise festgestellt, dass eine derartige bidirektional gereckte erste Laminatschicht 2 in beide Richtungen, also in Maschinenrichtung und Querrichtung, im Wesentlichen gleich gut reißfähig ist und ein kontrolliertes Reißverhalten aufweist.

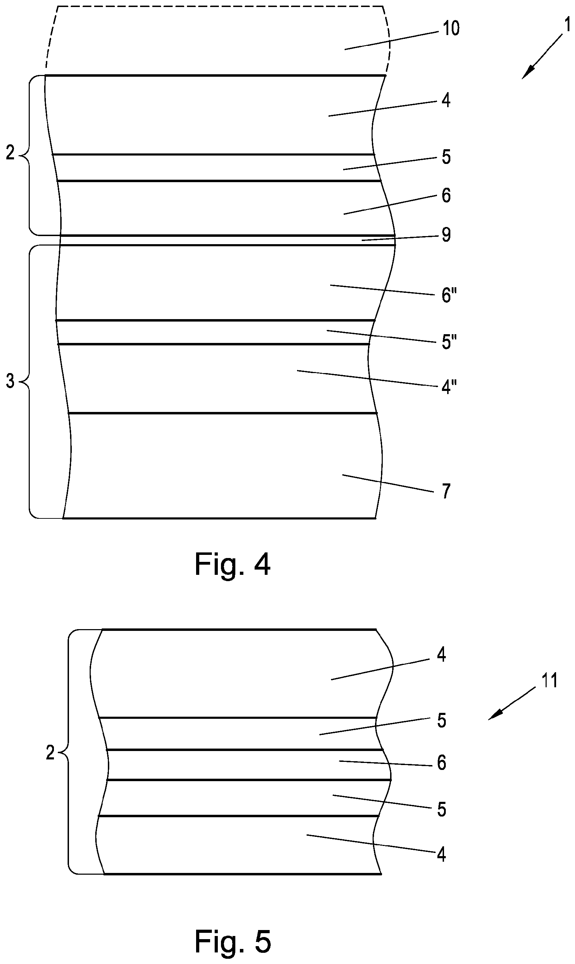

Für die erste Laminatschicht 2 in der Verwendung als erfinderische Barrierefolie 11 kommen aber auch symmetrische Aufbauten in Frage (wie in Fig.5 dargestellt), beispielsweise in der Form Substratschicht 4 aus 100 Vol% HDPE / Verbindungsschicht 5 / EVOH Barrierschicht 6 / Verbindungsschicht 5 / Substratschicht 4 aus 100 Vol% HDPE. In einer (oder beiden) der Substratschichten 4 könnte auch ein niedriger mLLDPE oder LLDPE Anteil (beispielsweise 5 bis 10 Vol%) beigemischt sein, vorzugsweise in einer der äußersten Schichten, um die Verarbeitungseigenschaften zu modifizieren. In einem solchen symmetrischen Aufbau können die beiden äußeren Substratschichten 4 auch dicker ausgeführt werden, als die inneren Schichten, also beispielsweise in Form eines x/1/1/1/x, Aufbaus mit x >1, insbesondere x = 1.5, 2, 3 oder 4.

Eine solche erste Laminatschicht 2 alleine als Barrierefolie 11 wird ebenfalls als erfinderisch angesehen und zeichnet sich insbesondere durch zumindest eine Substratschicht 4 aus, die einen HDPE-Anteil von zumindest 60 Vol%, vorzugsweise zumindest 80 Vol%, aufweist und die über eine Verbindungsschicht 5 wie oben beschrieben mit einer Barriereschicht 6 wie oben beschrieben verbunden ist. Die Substratschicht 4 kann dabei auch mehrschichtig aufgebaut sein. Zusätzlich kann die Barriereschicht 6 für einen symmetrischen Aufbau mittels einer weiteren Verbindungsschicht 5 wie oben beschrieben mit einer weiteren Substratschicht 4 wie oben beschrieben verbunden sein. Eine solche Barrierefolie 11 wird durch Co-Extrusion und anschließendes bidirektionales Recken hergestellt. Der Reckgrad beträgt dabei vorzugsweise zumindest 4:1 bis 8:1 in Maschinenrichtung und zumindest 5:1 bis 10:1 in Querrichtung. Das Recken kann dabei in-line (also unmittelbar nach der Co-Extrusion) oder off-line (also zu einem späteren Zeitpunkt nach der Co-Extrusion) erfolgen, sowie nacheinander erst längs, dann quer oder gleichzeitig.

Für die Herstellung des Verpackungslaminats 1 werden die gereckte erste Laminatschicht 2 und die zweite Laminatschicht 3, vorzugsweise durch Extrusionskaschierung, Extrusionsbeschichtung oder Klebekaschieren, miteinander verbunden, wobei die zweite Laminatschicht 3 mit der Barriereschicht 6 der ersten Laminatschicht 2 verbunden ist. Bei der Extrusionsbeschichtung wird die zweite Laminatschicht 3 auf die Barriereschicht 6 der ersten Laminatschicht 2 aufextrudiert, wobei dazwischen vorzugsweise auch ein Haftvermittler vorgesehen sein sollte. Beim Kaschieren wird die zweite Laminatschicht 3 mittels eines geeigneten Kaschierklebers, beispielsweise auf Basis von Polyurethanklebern oder auch Polyolefincopolymeren bei der Extrusionskaschierung, mit der Barriereschicht 6 verbunden. Die Dicke des Kaschierklebers beträgt vorzugsweise 2 bis 5 g/m² bei üblichen Klebern auf Polyurethanbasis bzw. 5 bis 20 g/m² bei der Extrusionskaschierung.

Es hat sich bei geeigneten zweiten Laminatschichten 3 herausgestellt, dass auch das ganze Verpackungslaminat 1 die Reißeigenschaften der ersten Laminatschicht 2 übernimmt, d.h. dass auch das Verpackungslaminat 1 in beide Richtungen gleichermaßen einfach von Hand reißbar ist. Die erste Laminatschicht 2 prägt damit dem Verpackungslaminat 1 die Reißeigenschaften auf.

Die zweite Laminatschicht 3 bildet dabei vorzugsweise eine Siegelschicht 7 aus, die in einer Verpackung aus dem Verpackungslaminat 1 in der Regel dem verpackten Produkt zugewandt ist. Die Verpackung wird dabei durch Zuschneiden, Falten und Thermosiegeln des Verpackungslaminats 1 hergestellt. Mögliche Verpackungen sind Beutel, Tüten, Säcke, etc.

Die zweite Laminatschicht 3 kann auch mehrschichtig ausgeführt sein, beispielsweise extrudiert oder co-extrudiert, wie in Fig.2 angedeutet und nachfolgend im Detail beschrieben. Die zweite Laminatschicht 3 kann aber auch mit einer Barrierefunktion ausgestattet sein und kann auch gereckt sein, wie in Fig.4 angedeutet und nachfolgend im Detail beschrieben.

In einer weiteren Ausgestaltung des Verpackungslaminats 1, wie in Fig.2 dargestellt, ist die erste Laminatschicht 2 an der Seite der Barriereschicht 6 mit der zweiten Laminatschicht 3 verbunden und an der Seite der Substratschicht 4 mit einer weiteren Laminatschicht 10, hier einer dritten Laminatschicht 8. Die dritte Laminatschicht 8 ist vorzugsweise eine ein- oder mehrschichtigen Polymerfolie, beispielsweise eine Folie aus vorwiegend PE (mindestens 80 Vol% PE), wie mit Bezug auf die zweite Laminatschicht 3 beschrieben. Die dritte Laminatschicht 8 kann auf die erste Laminatschicht 2 wieder entweder extrusionsbeschichtet oder klebekaschiert werden, wie mit Bezugnahme auf die Siegelschicht 7 in Fig.1 erläutert. Ein solches Verpackungslaminat 1 nach Fig.2 kann beispielsweise zur Herstellung von Tuben verwendet werden. In diesem Fall liegt die Dicke der zweiten Laminatschicht 3 und der dritten Laminatschicht 8 typischerweise im Bereich von 150µm.

In Fig.2 ist weiters angedeutet, dass auch die zweite Laminatschicht 3 mehrschichtig aufgebaut sein kann, hier beispielsweise mit zwei Schichten 7a, 7b, die die Siegelschicht 7 ausbilden. Gleiches gilt für die dritte Laminatschicht 8. Ein solcher Aufbau der zweiten Laminatschicht 3 kann natürlich auch in einer Ausführung nach Fig.1 vorgesehen sein.

Es ist ferner möglich, die gereckte erste Laminatschicht 2 nach dem Recken an der Barriereschicht 6 zu Metallisieren und/oder zu Bedrucken und/oder zu Beschichten (beispielsweise mit Aluminiumoxid oder Siliziumoxid), bevor die erste Laminatschicht 2 mit der zweiten Laminatschicht 3 verbunden wird. Vorzugsweise wird mit Aluminium metallisiert. Die HDPE Substratschicht 4 ist, vor allem nach dem Recken, ausreichend transparent, sodass das Druckbild, die Metallisierung oder die Beschichtung durch die Substratschicht 4 sichtbar ist. Die Barriereschicht 6 kann zum Zwecke des Bedruckens auch einer Vorbehandlung der zu bedruckenden Oberfläche unterzogen werden, beispielsweise einer Corona- oder Flammbehandlung, um die Haftung der Druckschicht auf der Barriereschicht 6 zu verbessern. Es kann aber, alternativ oder zusätzlich, auch die Substratschicht 4 bedruckt, metallisiert oder bedruckt werden, sowohl an der der Barriereschicht 6 zugewandten Seite, als auch an der anderen Seite, gegebenenfalls wieder nach einer Oberflächenbehandlung. Hierbei können gängige Druckverfahren eingesetzt werden, beispielsweise ein Tiefdruckverfahren oder ein Flexodruckverfahren.

Auch die dritte Laminatschicht 8 könnte, zusätzlich oder alternativ zur ersten Laminatschicht 2, an einer oder beiden Seiten bedruckt, metallisiert oder beschichtet sein.

In einer vorteilhaften Ausgestaltung des Ausführungsbeispiels der Fig.2 ist die Barriereschicht 6 der ersten Laminatschicht 2 metallisiert, vorzugsweise mit Aluminium, um die Barrierewirkung zu erhöhen. Zusätzlich könnte die dritte Laminatschicht 8 an der Außenseite bedruckt sein.

Mit Fig.3 wird ein weiteres Ausführungsbeispiel eines erfindungsgemäßen Verpackungslaminats 1 beschrieben, das vorzugsweise zur Herstellung von Tuben zum Einsatz kommen kann. Hierbei ist die erste Laminatschicht 2 an der Barriereschicht 6 wie im Beispiels der Fig.1 mit der zweiten Laminatschicht 3 verbunden. Die erste Laminatschicht 2 ist an deren Substratschicht 4 mit einer weiteren Laminatschicht 10, hier einer vierten Laminatschicht 2', verbunden, die denselben Aufbau hat wie die erste Laminatschicht 2 und die unidirektional (in Maschinenrichtung) oder bidirektional gereckt ist. Die vierte Laminatschicht 2' umfasst damit wieder eine Substratschicht 4', die mit einer Verbindungsschicht 5' mit einer Barriereschicht 6' verbunden ist. Hierbei ist die Barriereschicht 6' der vierten Laminatschicht 2' mit der Substratschicht 4 der ersten Laminatschicht 2 verbunden, vorzugsweise mit einem geeigneten Kaschierkleber wie oben beschrieben. Diese Schichten der vierten Laminatschicht 2' sind wie oben bereits beschrieben aufgebaut und zusammengesetzt. Die vierte Laminatschicht 2' besteht vorrangig aus PE-Materialien mit zumindest 80 Vol% PE-Anteil. Die Dicken und die exakten Zusammensetzungen bzw. Materialien der einzelnen Schichten der ersten Laminatschicht 2 und der vierten Laminatschicht 2' müssen dabei allerdings nicht überstimmen.

Auch in dieser Ausführung kann die vierte Laminatschicht 2' an der Substratschicht 4' und/oder an der Barriereschicht 6', zusätzlich oder alternativ zur ersten Laminatschicht 2, bedruckt, metallisiert oder beschichtet sein. In einer besonders vorteilhaften Ausgestaltung ist die vierte Laminatschicht 2' bedruckt, vorzugsweise an deren Barrierenschicht 6', und die erste Laminatschicht 2 metallisiert, vorzugsweise auf deren Barriereschicht 6 oder Substratschicht 4. Damit kann die Barrierewirkung des Verpackungslaminats 1 erhöht werden. Es kann aber auch eine Beschichtung aus Aluminiumoxid oder Siliziumoxid auf der Barriereschicht 6 oder Substratschicht 4 der ersten Laminatschicht 2 zur nochmaligen Erhöhung der Barrierewirkung vorgesehen sein.

Mit Fig.4 wird eine weitere vorteilhafte Ausgestaltung der Erfindung beschrieben. Hierbei ist die zweite Laminatschicht 3 wieder mehrschichtig ausgeführt und umfasst eine Substratschicht 4", Barriereschicht 6" und eine Verbindungsschicht 5", ähnlich wie in der ersten Laminatschicht 2. Für diese Schichten und auch für die Herstellung der zweiten Laminatschicht 3 in dieser Ausgestaltung gilt das oben zu den Figuren 1 bis 3 zur ersten Laminatschicht 2 oder vierten Laminatschicht 2' Ausgeführte analog. Zusätzlich umfasst die zweite Laminatschicht 3 in dieser Ausgestaltung eine Siegelschicht 7. Die Siegelschicht 7 besteht vorzugsweise aus einem PE-Material, wie beispielsweise mLLDPE, LLDPE, oder aus einem anderen geeigneten Thermoplast, beispielsweise Polypropylen (PP). Allerdings gilt für diese zweite Laminatschicht 3 mit der Siegelschicht 7 nach wie vor, dass diese aus zumindest 80 Vol% PE besteht. Die Siegelschicht 7 der zweiten Laminatschicht 3 wird mit den anderen Schichten der zweiten Laminatschicht 3 co-extrudiert. Die zweite Laminatschicht 3 der Fig.4 ist gereckt, so wie die erste Laminatschicht 2 und so wie oben beschrieben. Die Siegelschicht 7 ist in dieser Ausführung damit in einer mehrschichtigen, gereckten Barrierefolie, die ähnlich zur ersten Laminatschicht 2 aufgebaut ist, integriert. Damit weist diese zweite Laminatschicht 3 im Wesentlichen dieselben Reißeigenschaften auf wie die erste Laminatschicht 2.

In dieser Ausgestaltung sind die bidirektional gereckte erste Laminatschicht 2 und die in Maschinenrichtung oder bidirektional gereckte zweite Laminatschicht 3 an den aneinanderstoßenden Barriereschichten 6, 6" miteinander verbunden, vorzugsweise durch Klebekaschieren mittels einer Kleberschicht 9. Ein geeigneter Kaschierkleber ist beispielsweise ein Kleber auf Basis von Polyurethan oder einem Polyolefincopolymer. Die Dicke der Kaschierschicht 9 beträgt vorzugsweise 2 bis 5 g/m².

Auch in dieser Ausführung kann eine (oder auch mehrere) der Schichten des Verpackungslaminats 1 bedruckt, metallisiert oder beschichtet sein.

Bei der Ausführung könnte natürlich auch noch an der ersten Laminatschicht 2 zusätzlich eine weitere Laminatschicht 10 (beispielsweise eine dritte Laminatschicht 8 oder vierte Laminatschicht 2' wie oben beschrieben) vorgesehen sein, wie in Fig.4 angedeutet.

Das erfindungsgemäße Verpackungslaminat 1 weist somit zumindest eine unsymmetrische, bidirektional gereckte, erste Laminatschicht 2 aus zumindest 60 Vol% HDPE mit einer Substratschicht 4, einer Barriereschicht 6 und einer Verbindungsschicht 5 und eine damit verbundene zweite Laminatschicht 3, die eine Siegelschicht 7 ausbildet, mit einem PE Anteil von zumindest 80 Vol% auf. An diesem Verpackungslaminat 1 kann, wie oben beschrieben, an der der zweiten Laminatschicht 3 abgewandten Seite der ersten Laminatschicht 2 eine weitere ein- oder mehrschichtige Laminatschicht 10 (z.B. eine dritte Laminatschicht 8 oder vierte Laminatschicht 2') mit einem PE-Anteil von zumindest 80 Vol% angeordnet sein. Diese weitere ein- oder mehrschichtige Laminatschicht 10 ist damit mit der Substratschicht 4 der ersten Laminatschicht 2 verbunden.

In einer Verpackung aus einem erfindungsgemäßen Verpackungslaminat 1 ist die Siegelschicht 7 des Verpackungslaminats 1 vorteilhafter Weise der Verpackungsinnenseite zugewandt.

Durch das Bedrucken zumindest einer Schicht der ersten Laminatschicht 2, zweiten Laminatschicht 3 oder der weiteren Laminatschicht 10 eines erfindungsgemäßen Verpackungslaminats 1 mit einem Barrierelack, beispielsweise Polyvinylalkohol (PVOH), kann auch auf diese Weise die Barrierewirkung des Verpackungslaminats 1 weiter erhöht werden. Solche Lackschichten können sehr dünn aufgetragen werden, typischerweise im Bereich von 0,5 bis 2,0 g/m², und beeinträchtigen damit die Recyclingfreundlichkeit des Verpackungslaminats 1 nicht.

Abschließend ist anzumerken, dass auch jede einzelne der oben beschriebenen Schichten in der ersten Laminatschicht 2, zweiten Laminatschicht 3 oder der weiteren Laminatschicht 10 selbst wieder mehrschichtig aufgebaut sein kann.

## Patentansprüche

1. Verfahren zum Herstellen eines Verpackungslaminats (1) umfassend die Schritte
- Co-Extrusion einer ersten Laminatschicht (2) bestehend aus einer Substratschicht (4) mit einem HDPE-Anteil von zumindest 60 Vol%, vorzugsweise zumindest 70 Vol% und ganz besonders vorzugsweise zumindest 80 Vol%, einer Verbindungsschicht (5) und einer Barriereschicht (6) aus einem Barrierepolymer, aus Polyamid oder Ethylen-Vinylalkohol-Copolymer mit einer Dicke von maximal 20% der Gesamtdicke der ersten Laminatschicht (2), wobei die Verbindungsschicht (5) zwischen der Substratschicht (4) und der Barriereschicht (6) angeordnet wird,
- bidirektionales Recken der co-extrudierten ersten Laminatschicht (2),
- Verbinden der derart bidirektional gereckten ersten Laminatschicht (2) mit einer zweiten Laminatschicht (3) mit einem Polyethylen-Anteil von zumindest 80 Vol%, wobei die zweite Laminatschicht (3) mit der Barriereschicht (6) der ersten Laminatschicht (2) verbunden wird wobei im Verpackungslaminat (1) die Dicke der ersten Laminatschicht (2) zwischen 10µm und 40µm ist, die Dicke der Verbindungsschicht (5) maximal 10% der Gesamtdicke der ersten Laminatschicht (2) ist und die Dicke der zweiten Laminatschicht (3) zwischen 20µm und 200µm ist.

2. Verfahren nach Anspruch 1, **dadurch gekennzeichnet, dass** die erste Laminatschicht (2) vor dem Verbinden mit der zweiten Laminatschicht (3) an der Barriereschicht (6) bedruckt, metallisiert oder beschichtet wird.

3. Verfahren nach Anspruch 1 oder 2, **dadurch gekennzeichnet, dass** die erste Laminatschicht (2) an der Substratschicht (4) mit einer weiteren ein- oder mehrschichtigen Laminatschicht (10) mit einem Polyethylen-Anteil von zumindest 80 Vol% verbunden wird.

4. Verfahren nach Anspruch 3, **dadurch gekennzeichnet, dass** die erste Laminatschicht vor dem Verbinden mit der weiteren Laminatschicht (10) an der Barriereschicht (6) und/oder an der Substratschicht (4) bedruckt, metallisiert oder beschichtet wird.

5. Verfahren nach Anspruch 3, **dadurch gekennzeichnet, dass** zumindest eine Schicht der weiteren Laminatschicht (10) bedruckt, metallisiert oder beschichtet wird.

6. Verfahren nach Anspruch 3, **dadurch gekennzeichnet, dass** die erste Laminatschicht (2) an deren Substratschicht (4) mit einer mehrschichtigen weiteren Laminatschicht (10) in Form einer unidirektional oder bidirektional gereckten vierten Laminatschicht (2') verbunden wird, die eine Substratschicht (4') mit einem HDPE-Anteil von zumindest 60 Vol%, eine Barriereschicht (6') aus einem Barrierepolymer und eine dazwischen angeordnete Verbindungsschicht (5') aufweist, wobei die Barriereschicht (6') der vierten Laminatschicht (2') mit der Substratschicht (4) der ersten Laminatschicht (2) verbunden wird.

7. Verfahren nach Anspruch 1 oder 2, **dadurch gekennzeichnet, dass** die erste Laminatschicht (2) mit einer zweiten Laminatschicht (3) verbunden wird, die aus einer Substratschicht (4") mit einem HDPE-Anteil von zumindest 60 Vol%, vorzugsweise zumindest 70 Vol% und ganz besonders vorzugsweise zumindest 80 Vol%, einer Verbindungsschicht (5") einer Barriereschicht (6") aus einem Barrierepolymer, vorzugsweise aus Polyamid oder Ethylen-Vinylalkohol-Copolymer, mit einer Dicke von maximal 20% der Gesamtdicke der zweiten Laminatschicht (3) und einer Siegelschicht (7) besteht, wobei die Schichten co-extrudiert sind die Verbindungsschicht (5") der zweiten Laminatschicht (3) zwischen der Substratschicht (4") und der Barriereschicht (6") zweiten Laminatschicht (3) angeordnet ist und die Siegelschicht (7) an der Substratschicht (4") angeordnet ist und wobei die co-extrudierte zweite Laminatschicht (3) in Maschinenrichtung oder bidirektional gereckt ist, und wobei die Barriereschicht (6") der zweiten Laminatschicht (3) mit der Barriereschicht (6) der ersten Laminatschicht (2) verbunden wird.

8. Verpackungslaminat mit einer ersten Laminatschicht (2) und einer zweiten Laminatschicht (3) mit einem Polyethylen-Anteil von zumindest 80 Vol%, wobei die erste Laminatschicht (2) ein co-extrudierter und bidirektional gereckter Verbund aus einer Substratschicht (4) mit einem HDPE-Anteil von zumindest 60Vol%, einer Verbindungsschicht (5) und einer Barriereschicht (6) aus einem Barrierepolymer aus Polyamid oder Ethylen-Vinylalkohol-Copolymer, mit einer Dicke von maximal 20% der Gesamtdicke der ersten Laminatschicht, ist, wobei die Verbindungsschicht (5) zwischen der Substratschicht (4) und der Barriereschicht (6) angeordnet ist und die erste Laminatschicht (2) an deren Barriereschicht (6) mit der zweiten Laminatschicht (3) verbunden ist wobei im Verpackungslaminat (1) die Dicke der ersten Laminatschicht (2) zwischen 10µm und 40µm ist, die Dicke der Verbindungsschicht (5) maximal 10% der Gesamtdicke der ersten Laminatschicht (2) ist und die Dicke der zweiten Laminatschicht (3) zwischen 20µm und 200µm ist.

9. Verpackungslaminat nach Anspruch 8, **dadurch gekennzeichnet, dass** die Barriereschicht (6) der ersten Laminatschicht (2) bedruckt, metallisiert oder beschichtet ist.

10. Verpackungslaminat nach Anspruch 8 oder 9, **dadurch gekennzeichnet, dass** die erste Laminatschicht (2) an deren Substratschicht (4) mit einer weiteren ein- oder mehrschichtigen Laminatschicht (10) mit einem Polyethylen-Anteil von zumindest 80 Vol% verbunden ist.

11. Verpackungslaminat nach Anspruch 10, **dadurch gekennzeichnet, dass** zumindest eine Schicht der weiteren Laminatschicht (10) bedruckt, metallisiert oder beschichtet ist.

12. Verpackungslaminat nach Anspruch 10 oder 11, **dadurch gekennzeichnet, dass** die weitere Laminatschicht (10) eine vierte Laminatschicht (2') in Form eines co-extrudierten und in Maschinenrichtung oder bidirektional gereckten Verbundes aus einer Substratschicht (4') mit einem HDPE-Anteil von zumindest 60Vol%, einer Barriereschicht (6') aus einem Barrierepolymer, vorzugsweise aus Polyamid oder Ethylen-Vinylalkohol-Copolymer, und einer dazwischen angeordneten Verbindungsschicht (5') ist **und dass** die Substratschicht (4) der ersten Laminatschicht (2) mit der Barriereschicht (6') der vierten Laminatschicht (2') verbunden ist.

13. Verpackungslaminat nach Anspruch 8 oder 9, **dadurch gekennzeichnet, dass** die zweite Laminatschicht (3) ein co-extrudiertes, in Maschinenrichtung oder bidirektional gerecktes Laminat aus einer Substratschicht (4") mit einem HDPE-Anteil von zumindest 60 Vol%, vorzugsweise zumindest 70 Vol% und ganz besonders vorzugsweise zumindest 80 Vol%, einer Verbindungsschicht (5"), einer Barriereschicht (6") aus einem Barrierepolymer, vorzugsweise aus Polyamid oder Ethylen-Vinylalkohol-Copolymer, mit einer Dicke von maximal 20% der Gesamtdicke der zweiten Laminatschicht (3) und einer Siegelschicht (7) ist, wobei die Verbindungsschicht (5") der zweiten Laminatschicht (3) zwischen der Substratschicht (4") und der Barriereschicht (6") zweiten Laminatschicht (3) angeordnet ist und die Siegelschicht (7) an der Substratschicht (4") angeordnet ist **und dass** die Barriereschicht (6") der zweiten Laminatschicht (3) mit der Barriereschicht (6) der ersten Laminatschicht (2) verbunden ist.

## Claims

1. Method for producing a packaging laminate (1) comprising the steps of
- co-extruding a first laminate layer (2) consisting of a substrate layer (4) having an HDPE content of at least 60 vol.%, preferably at least 70 vol.% and very particularly preferably at least 80 vol.%, a connecting layer (5) and a barrier layer (6) consisting of a barrier polymer of polyamide or ethylene vinyl alcohol copolymer, having a thickness of maximum 20% of the total thickness of the first laminate layer (2), wherein the connecting layer (5) is arranged between the substrate layer (4) and the barrier layer (6),
- bidirectionally stretching the co-extruded first laminate layer (2),
- connecting the bidirectionally stretched first laminate layer (2) to a second laminate layer (3) having a polyethylene content of at least 80 vol.%, wherein the second laminate layer (3) is connected to the barrier layer (6) of the first laminate layer (2), wherein in the packaging laminate (1) the thickness of the first laminate layer (2) is preferably 10µm to 40µm, the thickness of the connecting layer (5) is at most 10% of the total thickness of the first laminate layer (2) and the thickness of the second laminate layer (3) is between 20µm and 200µm.

2. Method according to claim 1, **characterized in that** the first laminate layer (2) is printed, metallized or coated on the barrier layer (6) before being connected to the second laminate layer (3).

3. Method according to claim 1 or 2, **characterized in that** the first laminate layer (2) is connected, at the substrate layer (4), to a further single- or multilayer laminate layer (10) having a polyethylene content of at least 80 vol.%.

4. Method according to claim 3, **characterized in that** the first laminate layer is printed, metallized or coated on the barrier layer (6) and/or on the substrate layer (4) before being connected to the further laminate layer (10).

5. Method according to claim 3, **characterized in that** at least one layer of the further laminate layer (10) is printed, metallized or coated.

6. Method according to claim 3, **characterized in that** the first laminate layer (2) is connected, at its substrate layer (4), to a further multilayer laminate layer (10) in the form of a unidirectionally or bidirectionally stretched fourth laminate layer (2'), which has a substrate layer (4') having an HDPE content of at least 60 vol.%, a barrier layer (6') consisting of a barrier polymer, and a connecting layer (5') arranged therebetween, the barrier layer (6') of the fourth laminate layer (2') being connected to the substrate layer (4) of the first laminate layer (2).

7. Method according to claim 1 or 2, **characterized in that** the first laminate layer (2) is connected to a second laminate layer (3) which consists of a substrate layer (4") having an HDPE content of at least 60 vol.%, preferably at least 70 vol.% and very particularly preferably at least 80 vol.%, a connecting layer (5"), a barrier layer (6") consisting of a barrier polymer, preferably polyamide or ethylene vinyl alcohol copolymer, having a thickness of maximum 20% of the total thickness of the second laminate layer (3), and a sealing layer (7), the layers being co-extruded, the connecting layer (5") of the second laminate layer (3) being arranged between the substrate layer (4") and the barrier layer (6") of the second laminate layer (3) and the sealing layer (7) being arranged on the substrate layer (4"), and the co-extruded second laminate layer (3) being stretched in the machine direction or bidirectionally, and the barrier layer (6") of the second laminate layer (3) being connected to the barrier layer (6) of the first laminate layer (2).

8. Packaging laminate comprising a first laminate layer (2) and a second laminate layer (3) having a polyethylene content of at least 80 vol.%, wherein the first laminate layer (2) is a co-extruded and bidirectionally stretched composite consisting of a substrate layer (4) having an HDPE content of at least 60 vol.%, a connecting layer (5) and a barrier layer (6) consisting of a barrier polymer of polyamide or ethylene vinyl alcohol copolymer, having a thickness of maximum 20% of the total thickness of the first laminate layer, wherein the connecting layer (5) is arranged between the substrate layer (4) and the barrier layer (6), and the first laminate layer (2) is connected, at its barrier layer (6), to the second laminate layer (3), wherein in the packaging laminate (1) the thickness of the first laminate layer (2) is preferably 10µm to 40µm, the thickness of the connecting layer (5) is at most 10% of the total thickness of the first laminate layer (2) and the thickness of the second laminate layer (3) is between 20µm and 200µm.

9. Packaging laminate according to claim 8, **characterized in that** the barrier layer (6) of the first laminate layer (2) is printed, metallized or coated.

10. Packaging laminate according to claim 8 or 9, **characterized in that** the first laminate layer (2) is connected, at its substrate layer (4), to a further single- or multilayer laminate layer (10) having a polyethylene content of at least 80 vol.%.

11. Packaging laminate according to claim 10, **characterized in that** at least one layer of the further laminate layer (10) is printed, metallized or coated.

12. Packaging laminate according to claim 10 or 11, **characterized in that** the further laminate layer (10) is a fourth laminate layer (2') in the form of a co-extruded composite stretched in the machine direction or bidirectionally and consisting of a substrate layer (4') having an HDPE content of at least 60 vol.%, a barrier layer (6') consisting of a barrier polymer, preferably polyamide or ethylene vinyl alcohol copolymer, and a connecting layer (5') arranged therebetween, **and in that** the substrate layer (4) of the first laminate layer (2) is connected to the barrier layer (6') of the fourth laminate layer (2').

13. Packaging laminate according to claim 8 or 9, **characterized in that** the second laminate layer (3) is a co-extruded laminate stretched in the machine direction or bidirectionally and consisting of a substrate layer (4") having an HDPE content of at least 60 vol.%, preferably at least 70 vol.% and very particularly preferably at least 80 vol.%, a connecting layer (5"), a barrier layer (6") consisting of a barrier polymer, preferably polyamide or ethylene vinyl alcohol copolymer, having a thickness of maximum 20% of the total thickness of the second laminate layer (3), and a sealing layer (7), the connecting layer (5") of the second laminate layer (3) being arranged between the substrate layer (4") and the barrier layer (6") of the second laminate layer (3) and the sealing layer (7) being arranged on the substrate layer (4"), **and in that** the barrier layer (6") of the second laminate layer (3) is connected to the barrier layer (6) of the first laminate layer (2).

## Revendications

1. Procédé permettant de fabriquer un stratifié d'emballage (1), comprenant les étapes suivantes
- co-extrusion d'une première couche de stratifié (2) composée d'une couche de substrat (4) comportant une proportion d'HDPE d'au moins 60 % en volume, de préférence d'au moins 70 % en volume et, de manière particulièrement préférée, d'au moins 80 % en volume, d'une couche de liaison (5) et d'une couche barrière (6) en un polymère barrière à base de polyamide ou de copolymère éthylène-alcool vinylique, d'une épaisseur d'au plus 20 % de l'épaisseur totale de la première couche de stratifié (2), dans lequel la couche de liaison (5) est disposée entre la couche de substrat (4) et la couche barrière (6),
- étirage bidirectionnel de la première couche stratifiée (2) co-extrudée,
- liaison de la première couche de stratifié (2) ainsi étirée de manière bidirectionnelle avec une deuxième couche de stratifié (3) comportant une proportion de polyéthylène d'au moins 80 % en volume, dans lequel la deuxième couche de stratifié (3) est reliée à la couche barrière (6) de la première couche de stratifié (2), dans lequel l'épaisseur de la première couche de stratifié (2) dans le stratifié d'emballage (1) est comprise entre 10 µm et 40 µm, l'épaisseur de la couche de liaison (5) est d'au plus 10 % de l'épaisseur totale de la première couche de stratifié (2), et l'épaisseur de la deuxième couche de stratifié (3) est comprise entre 20 µm et 200 µm.

2. Procédé selon la revendication 1, **caractérisé en ce que** la première couche de stratifié (2) est imprimée, métallisée ou revêtue au niveau de la couche barrière (6) avant la liaison avec la deuxième couche de stratifié (3).

3. Procédé selon la revendication 1 ou 2, **caractérisé en ce que** la première couche de stratifié (2) est reliée au niveau de la couche de substrat (4) à une autre couche de stratifié (10) monocouche ou multicouche et comportant une proportion de polyéthylène d'au moins 80 % en volume.

4. Procédé selon la revendication 3, **caractérisé en ce que** la première couche de stratifié est imprimée, métallisée ou revêtue au niveau de la couche barrière (6) et/ou au niveau de la couche de substrat (4) avant la liaison avec l'autre couche de stratifié (10).

5. Procédé selon la revendication 3, **caractérisé en ce qu'**au moins une couche de l'autre couche de stratifié (10) est imprimée, métallisée ou revêtue.

6. Procédé selon la revendication 3, **caractérisé en ce que** la première couche de stratifié (2) est reliée au niveau de sa couche de substrat (4) à une autre couche de stratifié (10) multicouche sous la forme d'une quatrième couche de stratifié (2') étirée de manière unidirectionnelle ou bidirectionnelle et présentant une couche de substrat (4') comportant une proportion d'HDPE d'au moins 60 % en volume, une couche barrière (6') en un polymère barrière et une couche de liaison (5') disposée entre celles-ci, dans lequel la couche barrière (6') de la quatrième couche de stratifié (2') est reliée à la couche de substrat (4) de la première couche de stratifié (2).

7. Procédé selon la revendication 1 ou 2, **caractérisé en ce que** la première couche de stratifié (2) est reliée à une deuxième couche de stratifié (3) constituée d'une couche de substrat (4") comportant une proportion d'HDPE d'au moins 60 % en volume, de préférence d'au moins 70 % en volume et de manière particulièrement préférée d'au moins 80 % en volume, d'une couche de liaison (5"), d'une couche barrière (6") en un polymère barrière, de préférence en polyamide ou en copolymère éthylène-alcool vinylique, d'une épaisseur d'au plus 20 % de l'épaisseur totale de la deuxième couche de stratifié (3), et d'une couche de scellement (7), dans lequel les couches sont co-extrudées, la couche de liaison (5") de la deuxième couche de stratifié (3) est disposée entre la couche de substrat (4") et la couche barrière (6") de la deuxième couche de stratifié (3), et la couche de scellement (7) est disposée sur la couche de substrat (4"), dans lequel la deuxième couche de stratifié (3) co-extrudée est étirée dans la direction de la machine ou de manière bidirectionnelle, et dans lequel la couche barrière (6") de la deuxième couche de stratifié (3) est reliée à la couche barrière (6) de la première couche de stratifié (2).

8. Stratifié d'emballage comportant une première couche de stratifié (2) et une deuxième couche de stratifié (3) comportant une proportion de polyéthylène d'au moins 80 % en volume, dans lequel la première couche de stratifié (2) est un composite co-extrudé et étiré de manière bidirectionnelle constitué d'une couche de substrat (4) comportant une proportion d'HDPE d'au moins 60 % en volume, d'une couche de liaison (5) et d'une couche barrière (6) en un polymère barrière en polyamide ou en copolymère éthylène-alcool vinylique d'une épaisseur d'au plus 20 % de l'épaisseur totale de la première couche de stratifié, dans lequel la couche de liaison (5) est disposée entre la couche de substrat (4) et la couche barrière (6), et la première couche de stratifié (2) est reliée à la deuxième couche de stratifié (3) au niveau de sa couche barrière (6), dans lequel l'épaisseur de la première couche de stratifié (2) dans le stratifié d'emballage (1) est comprise entre 10 µm et 40 µm, l'épaisseur de la couche de liaison (5) est d'au plus 10 % de l'épaisseur totale de la première couche de stratifié (2), et l'épaisseur de la deuxième couche de stratifié (3) est comprise entre 20 µm et 200 µm.

9. Stratifié d'emballage selon la revendication 8, **caractérisé en ce que** la couche barrière (6) de la première couche de stratifié (2) est imprimée, métallisée ou revêtue.

10. Stratifié d'emballage selon la revendication 8 ou 9, **caractérisé en ce que** la première couche de stratifié (2) est reliée au niveau de sa couche de substrat (4) à une autre couche de stratifié (10) monocouche ou multicouche et comportant une proportion de polyéthylène d'au moins 80 % en volume.

11. Stratifié d'emballage selon la revendication 10, **caractérisé en ce qu'**au moins une couche de l'autre couche de stratifié (10) est imprimée, métallisée ou revêtue.

12. Stratifié d'emballage selon la revendication 10 ou 11, **caractérisé en ce que** l'autre couche de stratifié (10) est une quatrième couche de stratifié (2') sous la forme d'un composite co-extrudé et étiré dans la direction de la machine ou de manière bidirectionnelle constitué d'une couche de substrat (4') comportant une proportion d'HDPE d'au moins 60 % en volume, d'une couche barrière (6') en un polymère barrière, de préférence en polyamide ou en copolymère éthylène-alcool vinylique, et d'une couche de liaison (5') disposée entre celles-ci, **et en ce que** la couche de substrat (4) de la première couche de stratifié (2) est reliée à la couche barrière (6') de la quatrième couche de stratifié (2').

13. Stratifié d'emballage selon la revendication 8 ou 9, **caractérisé en ce que** la deuxième couche de stratifié (3) est un stratifié co-extrudé et étiré dans la direction de la machine ou de manière bidirectionnelle constitué d'une couche de substrat (4") comportant une proportion d'HDPE d'au moins 60 % en volume, de préférence d'au moins 70 % en volume et de manière particulièrement préférée d'au moins 80 % en volume d'une couche de liaison (5"), d'une couche barrière (6") en un polymère barrière, de préférence en polyamide ou en copolymère éthylène-alcool vinylique, d'une épaisseur d'au plus 20 % de l'épaisseur totale de la deuxième couche de stratifié (3), et d'une couche de scellement (7), dans lequel la couche de liaison (5") de la deuxième couche de stratifié (3) est disposée entre la couche de substrat (4") et la couche barrière (6") de la deuxième couche de stratifié (3), et la couche de scellement (7) est disposée sur la couche de substrat (4"), **et en ce que** la couche barrière (6") de la deuxième couche de stratifié (3) est reliée à la couche barrière (6) de la première couche de stratifié (2).
